# EUROPÄISCHE PATENTANMELDUNG

(11) **EP 4 803 847 A1**
(43) Veröffentlichungstag der Anmeldung: **09.09.2026**
(21) Anmeldenummer: 26160045.6
(22) Anmeldetag: 23.02.2026
(51) Int. Cl.: F41A 17/08, F41G 1/38

(54) **SYSTEM ZUR WARNUNG EINES SCHÜTZEN VOR EINER SCHUSSSITUATION MIT EINEM POTENTIELLEN SICHERHEITSPROBLEM**

(30) Priorität: 03.03.2025 DE 102025108021
(71) Anmelder: Carl Zeiss AG, 73447 Oberkochen (DE)
(72) Erfinder: Tobisch, Alexander, 73447 Oberkochen (DE); Urban, Steffen, 07745 Jena (DE); Dobbelstein, David, 73447 Oberkochen (DE); Stefan, Lucian, 73447 Oberkochen (DE)
(74) Vertreter: FDST Patentanwälte

(57) **Zusammenfassung**

Es wird ein System (30) zur Warnung eines Schützen vor einer Schusssituation mit einem potenziellen Sicherheitsproblem beschrieben. Das System (30) weist auf:
- eine Sensoranordnung (32) zur Erfassung wenigstens einer Messgröße über eine aktuelle räumliche Ausrichtung einer Schusswaffe,
- eine Datenschnittstelle (34) zur Erfassung einer Anzahl von Informationen über ein Umfeld des Schützen,
- eine Ausgabevorrichtung (36) zur Ausgabe eines optischen Warnhinweises an den Schützen, wobei die Ausgabevorrichtung in einem bestimmungsgemäßen Einsatzzustand derart an der Schusswaffe angeordnet ist, dass der Schütze im Anschlag den Warnhinweis aufnehmen kann, und
- ein Steuergerät (38).

Das Steuergerät (38) ist dazu eingerichtet, die wenigstens eine Messgröße mit zumindest einer aus der Anzahl von Informationen über das Umfeld des Schützen zusammenzuführen, hieraus zu bestimmen, ob bei einem Schuss mit der aktuellen räumlichen Ausrichtung ein Sicherheitsproblem zu erwarten ist, und für den Fall eines zu erwartenden Sicherheitsproblems mittels der Ausgabevorrichtung (36) den Warnhinweis an den Schützen auszugeben.

## Beschreibung

Die Erfindung betrifft ein System zur Warnung eines Schützen vor einer Schusssituation mit einem potenziellen Sicherheitsproblem.

Auf der Jagd besteht aufgrund des Gebrauchs von Schusswaffen stets ein Risiko, anderen Personen Schaden zuzufügen oder auch Tiere gegebenenfalls unnötig zu verletzen. So kommt es bspw. bei Drückjagden gelegentlich vor, dass andere Jäger angeschossen werden. Dies wird häufig versucht durch besonders auffällige Kleidung der Jäger auf Drück- oder Treibjagden zu vermeiden.

Aber auch bei Jagd in einem unbekannten Revier können Sicherheitsrisiken, insbesondere bei weniger erfahrenen Jägern, auftreten, wenn der Jäger das Revier durchziehende Wege und/oder angrenzende besiedelte Gebiete nicht kennt. Ebenso können aber auch Menschen im Schussfeld bei hoher Konzentration auf das Wildstück womöglich übersehen werden.

Zwar können die vorgenannten Sicherheitsprobleme, oder Risiken für solche Sicherheitsprobleme, durch ständiges Training und Sicherheitseinweisungen, versucht werden zu unterbinden oder zu reduzieren. Dennoch besteht ein gewisses Restrisiko, wenn die Überwachung beim Jäger (Schützen) selbst liegt.

Der Erfindung liegt die Aufgabe zugrunde, eine im Hinblick auf Sicherheitsprobleme abgemilderte Schusssituation zu ermöglichen.

Diese Aufgabe wird erfindungsgemäß gelöst durch ein System mit den Merkmalen des Anspruchs 1. Weitere vorteilhafte und teils für sich erfinderische Ausführungsformen und Weiterentwicklungen sind in den Unteransprüchen und der nachfolgenden Beschreibung dargelegt.

Das erfindungsgemäße System dient zur Warnung eines Schützen vor einer Schusssituation mit einem potenziellen Sicherheitsproblem. Hierfür weist das System eine Sensoranordnung auf, die zur Erfassung wenigstens einer Messgröße über eine Bewegung und/oder eine aktuelle, insbesondere absolute, räumliche Ausrichtung einer Schusswaffe eingerichtet ist. Zusätzlich oder alternativ weist das System Mittel, insbesondere eine Datenschnittstelle; zur Erfassung einer Anzahl von Informationen über ein Umfeld des Schützen und eine Ausgabevorrichtung zur Ausgabe eines optischen Warnhinweises an den Schützen auf. Diese Ausgabevorrichtung ist dabei in einem bestimmungsgemäßen Einsatzzustand derart an der Schusswaffe angeordnet, dass der Schütze im Anschlag - d. h., wenn dieser durch oder über eine Zieleinrichtung der Schusswaffe blickt - den Warnhinweis aufnehmen (d. h. sehen oder zumindest wahrnehmen) kann. Außerdem weist das System ein Steuergerät (auch als "Controller" bezeichnet) auf, das dazu eingerichtet ist, die wenigstens eine Messgröße und/oder zumindest eine (Information) aus der Anzahl von Informationen über das Umfeld des Schützen auszuwerten, hieraus zu bestimmen, ob bei einem Schuss unter der Voraussetzung der Bewegung bzw. Ausrichtung und/oder der Information über das Umfeld ein Sicherheitsproblem zu erwarten ist, und für den Fall eines zu erwartenden Sicherheitsproblems mittels der Ausgabevorrichtung den Warnhinweis an den Schützen auszugeben.

Das System dient vorteilhafterweise dazu, den Schützen dabei zu unterstützen, dessen Umfeld, insbesondere dessen Schussfeld, und/oder dessen Zielaufnahme auf potenzielle Sicherheitsprobleme zu überwachen. Zwar ist dies grundsätzlich eine Aufgabe eines jeden Schützen, allerdings können wie eingangs beschrieben, Situationen auftreten, in denen der Schütze gegebenenfalls trotz entsprechender Vorsicht, nicht jedes Sicherheitsproblem wahrnimmt oder wahrnehmen kann.

Vorzugsweise weist das System sowohl die Sensoranordnung als auch die Mittel, insbesondere die Datenschnittstelle, auf. Das Steuergerät ist in diesem Fall insbesondere dazu eingerichtet, die wenigstens eine Messgröße mit zumindest der einen aus der Anzahl von Informationen über das Umfeld des Schützen zusammenzuführen, hieraus zu bestimmen, ob bei einem Schuss, insbesondere mit der aktuellen Bewegung bzw. räumlichen Ausrichtung, ein Sicherheitsproblem zu erwarten ist, und für den Fall eines zu erwartenden Sicherheitsproblems mittels der Ausgabevorrichtung den Warnhinweis an den Schützen auszugeben.

Unter dem Begriff "räumliche Ausrichtung" der Schusswaffe wird hier und im Folgenden insbesondere eine Anordnung der Schusswaffe im Raum verstanden. Der Begriff umfasst dabei sowohl eine relative Ausrichtung, die nur auf eine vorhergehende Ausrichtung bezogen ist. Diese relative Ausrichtung gibt mithin eine Veränderung der Ausrichtung, insbesondere rotatorischer und/oder translatorischer Art, wieder (bspw. also dass die Schusswaffe um 10 Grad um die Längsachse rotiert wurde). Der Begriff umfasst aber auch eine absolute Ausrichtung. Die absolute Ausrichtung gibt dabei insbesondere die Ausrichtung mit Bezug auf ein insbesondere ortsfestes, vorzugsweise globales Koordinatensystem, wieder, bspw. also ob die Schusswaffe mit deren Schussrichtung um 5 Grad gegen eine Horizontalebene verkippt ist.

Gemäß einer bevorzugten Ausführung ist die Ausgabevorrichtung zumindest im bestimmungsgemäßen Einsatzzustand an einer mit der Schusswaffe verbundenen Zieloptik (bspw. einem analogen oder digitalen Zielfernrohr, einem Nachtsichtgerät, einem Wärmebildgerät, einem Reflexvisier oder dergleichen) angeordnet, vorzugsweise okularseitig mit der Zieloptik gekoppelt. Durch die okularseitige Anordnung kann der Schütze die Ausgabevorrichtung meist mit sehr hoher Wahrscheinlichkeit wahrnehmen, wenn er im Anschlag ist und somit durch das Okular der Zieloptik blickt.

In einer zweckmäßigen Weiterbildung, zumindest der Anordnung der Ausgabevorrichtung an der Zieloptik, ist die Ausgabevorrichtung dazu eingerichtet, den Warnhinweis in ein durch die Zieloptik einsehbares Bild einzublenden. Dadurch wird die Wahrnehmung des Warnhinweises besonders erleichtert und das Risiko, diesen zu übersehen, verringert.

Gemäß einer weiteren zweckmäßigen Weiterbildung ist die Ausgabevorrichtung dazu eingerichtet, als Warnhinweis eine Leuchtfarbe und/oder Leuchtstärke eines beleuchteten Absehens und/oder eine Anzeige der Zieloptik zu verändern. Insbesondere wechselt die Ausgabevorrichtung die Leuchtfarbe in eine Warnfarbe, bspw. in ein besonders grelles Rot. Zusätzlich oder alternativ zu dem Farbwechsel kann das Absehen auch flackernd (pulsierend, blinkend) beleuchtet werden, um die Auffälligkeit zu erhöhen. Ein beleuchtetes Absehen ist auch bei analogen Zieloptiken bekannt. Weiter zusätzlich oder alternativ, insbesondere im Fall einer elektronischen ("digitalen") Zieloptik (d. h. insbesondere einer Zieloptik mit Zusatzfunktionen wie z. B. Entfernungsmessung, Wärme- oder Nachtbildfunktion etc.), ist die Ausgabevorrichtung dazu eingerichtet, den Warnhinweis in das durch das Okular betrachtbare Bild einzublenden, optional darüber zu legen. Optional kann eine Größe und/oder Intensität des Warnhinweises in Abhängigkeit von einer Schwere des Sicherheitsproblems seitens der Ausgabevorrichtung (oder des Steuergeräts) variiert werden. Beispielsweise kann bei einer Personengefährdung das Absehen so hell beleuchtet werden, dass eine Zielauffassung verhindert oder signifikant erschwert wird. Im Fall einer Einblendung des Warnhinweises kann dieser in diesem Fall auch derart groß dargestellt werden, dass der Warnhinweis das Absehen und das Abbild des Zielbereichs überdeckt. Alternativ - insbesondere im Fall einer digitalen Zieloptik, bei der das Absehen in das mittels eines Displays im Okular dargestellten Bilds eingeblendet wird - kann das Absehen auch schwächer als üblich dargestellt oder ausgeblendet werden, so dass ein Zielen verhindert wird. Optional kann auch, vorzugsweise zusätzlich zu dem Warnhinweis oder auch als Warnhinweis selbst - insbesondere bei einer Personengefährdung - das gesamte Bild (insbesondere also das das Bild anzeigende Display) abgeschaltet werden, so dass keine Zielbeobachtung mehr ermöglicht ist.

Gemäß einer zweckmäßigen Ausführung ist zumindest die Ausgabevorrichtung, vorzugsweise das gesamte System, in die Zieloptik integriert.

Gemäß einer zweckmäßigen, alternativen Ausführung ist zumindest die Ausgabevorrichtung, vorzugsweise das (gesamte) System, reversibel mit der Zieloptik koppelbar, insbesondere in Form eines Moduls zur Funktionserweiterung der Zieloptik signalübertragungstechnisch mit letzterer verbindbar. In diesem Fall weist die Zieloptik zweckmäßigerweise eine Schnittstelle zur Datenübertragung mit unterschiedlichen Modulen, bspw. einem Modul zur Entfernungsmessung oder dergleichen, auf.

Gemäß einer weiteren zweckmäßigen Ausführung weist die Ausgabevorrichtung, um den Warnhinweis vorzugsweise zusätzlich auch akustisch ausgeben zu können, einen Lautsprecher auf oder ist hierzu mit einem Lautsprecher koppelbar. Beispielsweise weist die Ausgabevorrichtung oder zumindest das System eine Audioschnittstelle für eine kabelgebundene, vorzugsweise aber kabellose Kopplung mit einem Lautsprecher oder einer diesen aufweisenden Vorrichtung, insbesondere einem Kopfhörer, optional einem Gehörschutz-Kopfhörer, auf. Die Ausgabevorrichtung weist in diesem Fall optional eine Anzahl hinterlegter, gesprochener Warnhinweise oder eine Funktionalität (vorzugsweise eine künstliche Intelligenz) zur Erzeugung (Synthetisierung) entsprechender gesprochener Warnhinweise auf.

Gemäß einer zweckmäßigen Ausführung ist die Sensoranordnung durch wenigstens einen gyroskopischen Sensor gebildet, der dazu eingerichtet ist, jeweils eine Messgröße für einen Elevationswinkel (Neigungs- oder auch Nickwinkel), einen Schwenkwinkel (Gierwinkel) und einen Rollwinkel der Schusswaffe, vorzugsweise zumindest bezüglich des Schwenk- und/oder Neigungswinkels bezogen auf eine Horizontale, zu erfassen. Bevorzugt ist die Sensoranordnung durch ein inertiales Messsystem ("IMU") gebildet, das den genannten gyroskopischen Sensor und vorzugsweise auch einen Kompasssensor (bspw. in Form eines Erdmagnetfeldsensors, Magnetometers) umfasst. Das Steuergerät ist vorzugsweise dazu eingerichtet, aus jeder Messgröße den entsprechenden Winkel abzuleiten. Bei dem gyroskopischen Sensor kann es sich grundsätzlich um einen "echten" Gyrosensor, bspw. ein Lasergyroskop oder dergleichen handeln. Vorzugsweise ist der gyroskopische Sensor aber durch einen drei- oder mehrachsigen (bspw. sechsachsigen) Beschleunigungssensor gebildet, der bspw. in Form eines mikroelektromechanischen Systems ("MEMS") ausgebildet ist. Derartige Sensoren und auch diese Sensoren umfassende IMUs sind beispielsweise aus Mobiltelefonen bekannt.

Vorzugsweise ist das Steuergerät dazu eingerichtet, insbesondere als absolute räumliche Ausrichtung, vorzugsweise mittels der vorstehend genannten IMU, den Rollwinkel der Schusswaffe zu ermitteln und gegebenenfalls einen Warnhinweis auszugeben, dass die Schusswaffe verkantet ist, wenn der Rollwinkel größer 15 Grad gegenüber einer Horizontalen beträgt. Bekanntermaßen stimmen Zielhilfen bei verkanteten Schusswaffen mit deren Achsen nicht mehr mit der Ebene der Geschossflugbahn überein, so dass insbesondere bei größeren Distanzen (bspw. bei 100 m und mehr) Fehlschüsse auftreten. Zusätzlich zu dem Warnhinweis kann das Steuergerät optional auch einen künstlichen Horizont in das durch das Okular der Zielhilfe betrachtbare Bild einblenden, um dem Schützen eine Korrektur zu vereinfachen. Verkanten kann verstärkt - insbesondere auch bei unerfahrenen Schützen - auftreten, wenn das umliegende Gelände kaum Anhaltspunkte zum Ausrichten der Schusswaffe gibt. Dies ist häufig in bergigem und/oder alpinem Gelände der Fall.

Des Weiteren ist das Steuergerät (alternativ oder zusätzlich zur vorstehenden Betrachtung des Rollwinkels) - insbesondere in gemeinsamer Betrachtung mit einer Schussentfernung - zweckmäßigerweise dazu eingerichtet, den Schwenkwinkel und/oder den Neigungswinkel zu erfassen und aus dem zeitlichen Verlauf des Neigungs- und/oder der Schwenkwinkels (insbesondere deren Extremwerte oder anderen statistischen Daten wie z. B. der Standardabweichung) eine voraussichtliche (bspw. maximale oder mittlere) Treffpunktverlagerung auf die prognostizierte Schussentfernung zu ermitteln und anzugeben. Bei einer Treffpunktverlagerung von größer als z. B. 20 oder 30 cm kann dies auch als Warnhinweis ausgegeben werden, bei geringeren Treffpunktverlagerungen bspw. auch lediglich als Information. Anders ausgedrückt ist in diesem Fall das Steuergerät dazu eingerichtet, anhand des Verlaufs des Neigungs- und/oder Schwenkwinkels auf eine übermäßige Bewegung der Schusswaffe und dadurch bedingt auf eine mit hoher Wahrscheinlichkeit zu einem Fehlschuss führenden Treffpunktverlagerung zu schließen. Eine Bewegung der Schusswaffe und damit auch der Zieloptik liegt häufig an einer Atembewegung, die nach körperlicher Anstrengung vor dem Schuss (bspw. Aufsuchen der Schussposition bergauf) häufig zunimmt, und/oder an einer unzureichend stabilen Auflage für die Schusswaffe. Der zeitliche Verlauf des Neigungs- und/oder Schwenkwinkels kann in diesem Fall auch als relative räumliche Ausrichtung, bspw. mittels eines Gyrosensors, ermittelt werden. Eine IMU ist in diesem Fall nicht erforderlich, kann aber gleichermaßen hierfür genutzt werden.

Die Schussentfernung kann dabei beispielsweise mittels manueller Eingabe des Schützen, vorzugsweise in ein mit dem System in datenübertragungstechnischer Verbindung stehendes Mobilgerät (bspw. Smartphone oder Tablet), oder auch mittels eines in das System integrierte oder in datenübertragungstechnischer Verbindung mit diesem stehendes Entfernungsmesssystem ermittelt werden.

Gemäß einer besonders zweckmäßigen Ausführung ist die Datenschnittstelle dazu eingerichtet, (insbesondere als Information über das Umfeld des Schützen) eine Standortinformation zu dem aktuellen Standort des Systems zu erfassen. Bei der Standortinformation handelt es sich beispielsweise zumindest um Längen- und Breitenangaben des aktuellen Standorts. Insbesondere ist die Datenschnittstelle als Empfänger eines globalen Navigationssatellitensystems ("GNSS") ausgebildet. Die Standortinformation kann und wird vorteilhafterweise dazu verwendet, in einer Applikation, mittels derer sich verschiedene Schützen, insbesondere Jäger, vernetzen können und/oder die Hintergrundinformationen zu einem Schussfeld, insbesondere einem Jagdrevier bereitstellt, den eigenen Standort zu ermitteln und mit Standorten anderer Schützen oder Bereichen mit erhöhten Sicherheitsauflagen (bspw. Wohngebieten, Wander- oder Forstwegen und dergleichen) abzugleichen.

Gemäß einer weiteren zweckmäßigen Ausführung ist die Datenschnittstelle dazu eingerichtet ist, im bestimmungsgemäßen Betrieb mit einer Datenbank verbunden zu sein und - insbesondere gesteuert durch das Steuergerät - von dieser als Information über das Umfeld des Schützen Topographiedaten zu der Standortinformation auszulesen. Vorzugsweise ist das Steuergerät dazu eingerichtet, diese Topographiedaten für eine Umgebung in üblicher Schussentfernung, bspw. ca. 1.000 Meter um Standort, optional in Schussrichtung bis zu 3.000 Meter, auszulesen. Außerdem ist das Steuergerät dazu eingerichtet, anhand der räumlichen Ausrichtung der Schusswaffe einen Wahrscheinlichkeitswert für einen Bodentreffer innerhalb einer vorgegebenen Entfernung zum Standort zu ermitteln und den Warnhinweis auszugeben, wenn der Wahrscheinlichkeitswert einen vorgegebenen Wert unterschreitet. Insbesondere ermittelt das Steuergerät also anhand der Topographiedaten, ob das Gelände innerhalb der vorgegebenen Entfernung zum Standort des Schützen ein - vorzugsweise natürlicher - Kugelfang vorhanden ist. Die vorgegebene Entfernung wird von dem Steuergerät vorzugsweise im Bereich üblicher maximaler jagdlicher Schussentfernungen, bspw. auf 300 bis 500 Meter, und/oder in Abhängigkeit von infrastrukturellen Merkmalen in der Umgebung gewählt. Beispielsweise muss ein solcher Kugelfang bereits bei 150 Metern Entfernung getroffen werden können, wenn bei 300 Metern Entfernung hinter einer Bergkuppe ein Weg verläuft. Weiter beispielsweise darf bei einer hangaufwärts gerichteten Schussrichtung deren Trajektorie nicht über Scheitelpunkt (Gipfel) des Hangs hinweg verlaufen, sondern muss in der entsprechend vorgegebenen Entfernung in dem Hang enden. Anderenfalls ist das Steuergerät dazu eingerichtet, den Warnhinweis auszugeben.

Gemäß einer besonders zweckmäßigen Weiterbildung ist die Datenschnittstelle dazu eingerichtet, im bestimmungsgemäßen Betrieb mit einer Datenbank verbunden zu sein und von dieser als Information über das Umfeld des Schützen Informationen über potenziell mit Personen besetzte Umgebungsbereiche zu der Standortinformation auszulesen. Insbesondere ist diese Datenbank dabei mittels der vorstehend genannten Applikation zugänglich und/oder in dieser implementiert. Insbesondere ist die Datenschnittstelle auch dazu eingerichtet, die eigene Standortinformation (insbesondere den eigenen Standort) an die Applikation und/oder an die Datenbank zu übermitteln. Letzteres ist insbesondere in dem Fall zweckmäßig, dass die Applikation für die Verwendung durch Jäger, insbesondere bei einer Drückjagd, eingerichtet und vorgesehen ist. Sind in der Datenbank und somit der Applikation die jeweiligen Standorte anderer Jäger bekannt, können die Umgebungsbereiche zum eigenen Standort, in denen sich die Standorte der anderen Personen (Jäger) befinden, mit einem Warnhinweis ("Nicht-Schuss-Bereich", "Sperrfläche", "Personen" oder dergleichen) markiert werden. Dies kann beispielsweise auf einem smarten Mobilgerät (Smartphone) in einer Kartenansicht markiert dargestellt werden. Ebenso kann dieser Warnhinweis aber auch in der Zieloptik eingeblendet werden, insbesondere wenn auf Basis des gyroskopischen Sensors ermittelt wird, dass die Schusswaffe mit deren Schussrichtung in Richtung auf eine dieser "Sperrflächen" geschwenkt wird. Gleichermaßen kann auch eine Anzeige oder Markierung von bewohntem Gebiet und Wegen erfolgen, denn diese können in manchen Fällen aus Sicht des Schützen aufgrund von Baumbestand oder dergleichen nicht unmittelbar einsehbar sein.

Gemäß einer weiteren zweckmäßigen Weiterbildung ist die Datenschnittstelle dazu eingerichtet, im bestimmungsgemäßen Betrieb mit einer (insbesondere weiteren) Datenbank verbunden zu sein und von dieser als Information über das Umfeld des Schützen Wetterinformationen auszulesen. Als Wetterinformationen werden dabei Luftdruck, Luftfeuchte, Temperatur, Windgeschwindigkeit und/oder Windrichtung ermittelt. Diese Größen beeinflussen bekanntermaßen zumindest bei langen Schussentfernungen die Flugbahn eines Geschosses. Insbesondere ist das Steuergerät dazu eingerichtet, anhand wenigstens einer, vorzugsweise mehrere dieser Größen eine voraussichtliche Abweichung des Geschosses von dessen idealer Flugbahn zu ermitteln. Vorzugsweise ist das Steuergerät dabei auch dazu eingerichtet, einen Warnhinweis auszugeben, wenn die vorausberechnete Abweichung im Ziel größer als ein vorgegebener, optional entfernungsabhängiger, Grenzwert ist. Beispielsweise gibt das Steuergerät den Warnhinweis aus, wenn die ermittelte voraussichtliche Abweichung größer als 50 cm, vorzugsweise größer als 20 cm, ist. Eine derart große Abweichung kann dahingehend zu einer unsicheren Schusssituation führen, als dass durch einen Fehlschuss eine unnötige Verletzung des Wildstücks und somit Leiden hervorgerufen werden kann.

Gemäß einer vorteilhaften Ausführung ist das Steuergerät im bestimmungsgemäßen Betrieb, insbesondere mittels der Datenschnittstelle, mit einer Bilderfassungseinheit der Zieloptik datenübertragungstechnisch verbunden. Hierbei ist das Steuergerät dazu eingerichtet, Bilddaten von der Bilderfassungseinheit zu erfassen, diese hinsichtlich des oder eines zusätzlichen Sicherheitsproblems auszuwerten und gegebenenfalls mittels der Ausgabevorrichtung den Warnhinweis auszugeben Diese Bilddaten bilden insbesondere ebenfalls Informationen über das Umfeld des Schützen. Diese Auswertung des Bilddaten ist außerdem unabhängig von der Erfassung der räumlichen Ausrichtung der Schusswaffe.

Insbesondere ist das Steuergerät im Fall der vorstehenden Auswertung hinsichtlich des zusätzlichen Sicherheitsproblems dazu eingerichtet, die Bilddaten auf die Anwesenheit einer Person im Blickfeld der Zieloptik und damit im Schussfeld auszuwerten. Grundsätzlich kann das Steuergerät aber im Rahmen einer eigenständigen Erfindung auch nur zu der Auswertung hinsichtlich des zusätzlichen Sicherheitsproblems, insbesondere der Anwesenheit einer Person im Schussfeld, eingerichtet sein. In diesem Fall kann die vorstehend beschriebene Sensoranordnung auch nicht vorhanden sein oder optional nicht (zumindest nicht durchgehend) genutzt werden. Die Ausführung mit einer Personenerkennung erhöht vorteilhafterweise die Sicherheit besonders, da das Risiko, dass der Schütze eine Person, die im Blickfeld der Zieloptik anwesend ist, aber bspw. aufgrund hoher Konzentration des Schützen auf dessen Ziel nicht von dem Schützen erkannt wird, hierdurch verringert oder sogar ausgeräumt werden kann.

Gemäß einer vorteilhaften Weiterbildung ist das Steuergerät dazu eingerichtet, die Bilddaten auf die Anwesenheit eines Wildstücks auszuwerten und - insbesondere die Art des Wildstücks zu identifizieren und die Art des Wildstücks - mit Abschussfreigaben für unterschiedliche Wildstücke abzugleichen, die in einer (insbesondere weiteren) Datenbank, mit der die Datenschnittstelle im bestimmungsgemäßen Betrieb verbunden ist, hinterlegt sind. Diese weitere Datenbank kann vorteilhafterweise ebenfalls wie vorstehend beschrieben durch die Applikation zugänglich oder in diese integriert sein. Der Abgleich erfolgt vorzugsweise ebenfalls im Rahmen der vorstehend beschriebenen Applikation. Beispielsweise erfolgt dabei, insbesondere anhand der Standortinformation, eine Erkennung eines Jagdreviers, in dem sich die Schusswaffe (und somit der zugeordnete Jäger) aktuell befindet. In der, bspw. in der Applikation enthaltenen oder insbesondere durch diese zugänglichen cloud-basierten, Datenbank sind in diesem Fall vorzugsweise aktuelle Abschussverbote und/oder explizite Freigaben, die bspw. revierabhängig vorgegeben sein können, hinterlegt. Mittels des vorstehend beschriebenen Abgleichs wird also dem Jäger die Information eingeholt und vorzugsweise auch als (Warn-) Hinweis angezeigt, ob das im Blickfeld der Zieloptik befindliche, bspw. aktuell angesprochene, Wildstück geschossen werden darf (bspw. in dem eine Absehenbeleuchtung grün aufleuchtet) oder aktuell ein Abschussverbot vorliegt (bspw. rot leuchtende Absehenbeleuchtung und/oder eingeblendete Zusatzinformation).

Gemäß einer weiteren zweckmäßigen Ausführung weist das System, insbesondere die Mittel zur Erfassung der Information über das Umfeld des Schützen, einen Abstandssensor auf, der im bestimmungsgemäßen Einsatzzustand okularseitig an der Zieloptik angeordnet und optional mit der Ausgabevorrichtung integriert ausgebildet ist. Das Steuergerät ist in diesem Fall insbesondere dazu eingerichtet, ein Sensorsignal des Abstandssensors auf ein Unterschreiten einer darin transportierten Messgröße für einen Abstand eines Objekts zu dem Abstandssensor auszuwerten und bei Unterschreiten eines Minimalabstandswerts einen zugeordneten Warnhinweis auszugeben. Dies ist dahingehend vorteilhaft, als dass bei einem zu geringen Abstand zwischen Auge und Okular rückstoßbedingt ein Verletzungsrisiko besteht. Insbesondere bei vollelektronischen ("digitalen") Zieloptiken treten visuelle Auffälligkeiten bei zu großen oder zu kleinen "Augenabständen" teilweise nicht derart auf wie bei rein optischen Zieloptiken. Solche Auffälligkeiten sind beispielsweise ein dunkler Rand um das Bild bei zu großem Augenabstand oder das Fehlen eines dünnen Rands bei zu kleinem Augenabstand. Dieser Warnhinweis ist also auf die Sicherheit des Schützen selbst gerichtet, damit dieser sich nicht an der Zieloptik verletzt, wenn der Schuss bricht und die Schusswaffe durch den Rückstoß nach hinten "schlägt".

Gemäß einer weiteren zweckmäßigen Ausführung weist die Ausgabevorrichtung zur Ausgabe des jeweiligen Warnhinweises (optional zusätzlich oder alternativ zur Einblendung des Warnhinweises in die Zieloptik, bspw. in Form der andersfarbigen und/oder blinkenden Absehenbeleuchtung) wenigstens ein vom Schützen einsehbares Leuchtmittel und/oder ein Display auf. Diese Ausführung ist insbesondere dann zweckmäßig, wenn das System oder zumindest die Ausgabevorrichtung als Modul an die Zieloptik angebaut werden kann. Leuchtmittel sind beispielsweise ein oder mehrere LEDs, die im bestimmungsgemäßen Einsatzzustand zum Schützen hin gewandt angeordnet sind. Das Display ist vorteilhafterweise ebenfalls zum Schützen gewandt, kann optional aber auch klappbar gestaltet sein, so dass der Schütze einerseits auf das Display sehen kann, wenn die Schusswaffe abgesetzt ist, beim Inanschlagnehmen der Schusswaffe aber das Display aufstellen und somit auch aus einem Bereich hinter der Zieloptik weiter beobachten kann.

Das Steuergerät - auch als Controller bezeichnet - ist optional zumindest im Kern durch einen Mikrocontroller mit einem Prozessor und einem Datenspeicher gebildet, in dem die vorstehend beschriebene Funktionalität in Form einer Betriebssoftware (Firmware) programmtechnisch implementiert ist. Alternativ kann der Controller aber auch durch ein nicht-programmierbares elektronisches Bauteil, z.B. einen ASIC, gebildet sein, in dem die Funktionalität mit schaltungs-technischen Mitteln implementiert ist.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen schematisch und exemplarisch:
- Fig. 1: in einer Prinzipskizze ein Zielfernrohr mit einem System zur Warnung eines Schützen,
- Fig. 2-5: in unterschiedlichen perspektivischen Darstellungen Ausführungsbeispiele des Systems, und
- Fig. 6-9: unterschiedliche Anwendungsbeispiele des Systems.

Einander entsprechende Teile sind in allen Figuren stets mit gleichen Bezugszeichen versehen.

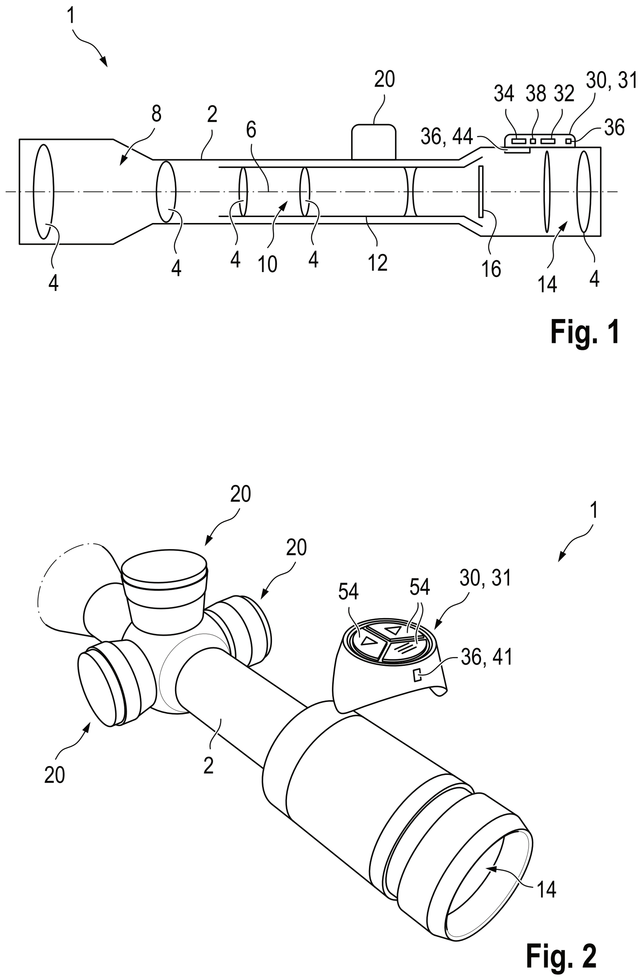

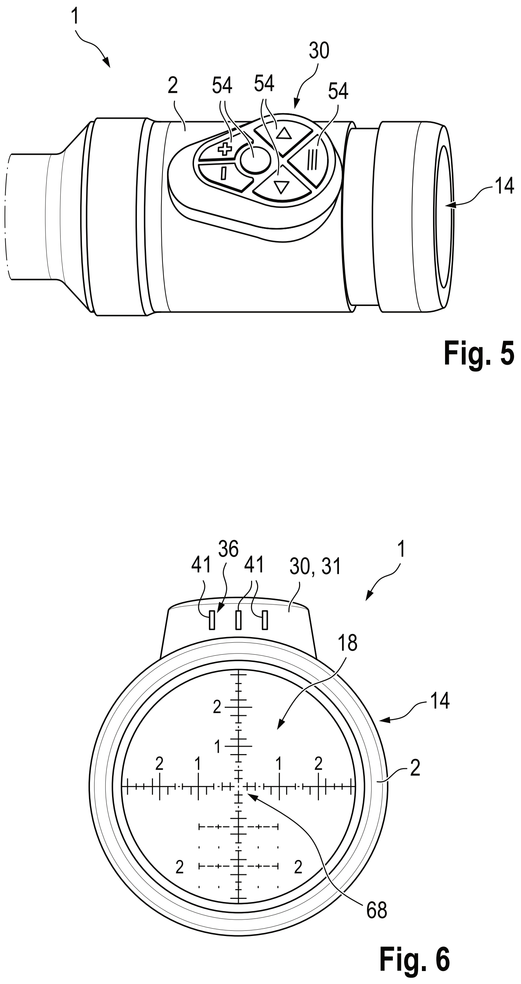

Fig. 1 zeigt eine Prinzipskizze einer Zieloptik, hier konkret eines Zielfernrohrs 1, für eine Schusswaffe. Das Zielfernrohr 1 weist ein rohrförmiges (Außen-) Gehäuse 2 auf, in dem mehrere Linsen 4 entlang eines Lichtwegs 6 aufeinanderfolgend angeordnet sind. Die Linsen 4 bilden dabei wenigstens eine Objektiv-Linsengruppe 8 und eine Linsengruppe eines sogenannten Umkehrsystems 10, das in einem "Innentubus" 12, d. h. einem rohrförmigen Halter, bildseitig auf die Objektiv-Linsengruppe 8 folgend im Gehäuse 2 angeordnet ist. Auf dieses Umkehrsystem 10 folgend ist bildseitig eine weitere Linsengruppe im Gehäuse 2 angeordnet, die ein Okular 14 bildet. Im dargestellten Ausführungsbeispiel ist ein Absehen-Element 16 am okularseitigen Ende des Innentubus 12 angeordnet. Dieses Absehen-Element 16 ist beispielsweise durch eine Glasscheibe gebildet, die aufgedruckt, geätzt oder anderweitig sichtbar gemacht eine Absehenmarkierung trägt. Diese Absehenmarkierung ruft in einem durch das Okular 14 ersichtliche Bild ein Absehen 18 (vgl. Fig. 6) hervor. Das Gehäuse 2 trägt einen Verstellturm 20, der eine Verstellmechanik (nicht näher dargestellt) umfasst, die im vorliegenden Ausführungsbeispiel auf den Innentubus 12 wirkt und bei Betätigung das Umkehrsystem 10 gegenüber einer optischen Achse (hier in einer Neutralstellung des Umkehrsystems 10 beispielhaft deckungsgleich mit dem Lichtweg 6) verkippt. Das Absehen-Element 16 ist am bildseitigen Ende des Umkehrsystems 10 im Drehpunkt des Innentubus 12 angeordnet, so dass das Absehen-Element 16 selbst quasi ortsfest verbleibt. Eine relative Verstellung des Absehens 18 im von einem Nutzer (Schützen) betrachtbaren Bild wird hierbei durch die Verkippung des Umkehrsystems 10 hervorgerufen.

In einem alternativen, nicht dargestellten, Ausführungsbeispiel ist das Absehen-Element 16 zwischen der Objektiv-Linsengruppe 8 und dem Umkehrsystem 10 angeordnet. In diesem Fall wirkt die Verstellmechanik auf das Absehen-Element 16 und versetzt dieses relativ zu einer optischen Achse der Objektiv-Linsengruppe 8.

Dem Zielfernrohr 1 ist ein System ("Hilfssystem" 30) zur Warnung des Schützen vor einer Schusssituation mit einem potenziellen Sicherheitsproblem zugeordnet. Ein Systemmodul 31 des Hilfssystems 30 ist dabei objektivseitig am Gehäuse 2 des Zielfernrohrs 1 angeordnet.

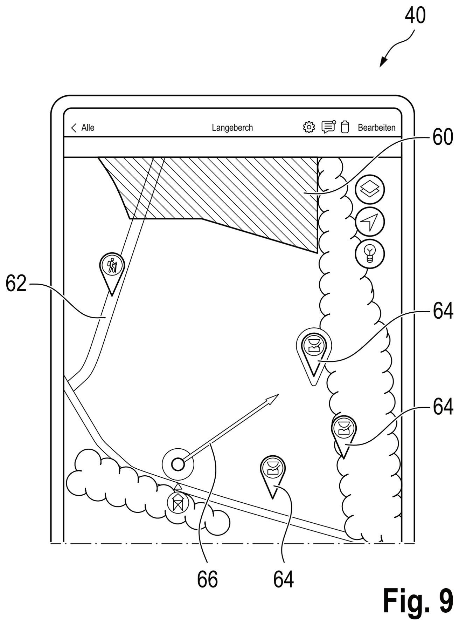

Das Hilfssystem 30 weist dabei eine Sensoranordnung 32 auf, die dazu eingerichtet ist, wenigstens eine Messgröße über eine räumliche Ausrichtung der Schusswaffe zu erfassen. Des Weiteren weist das Hilfssystem 30 eine Datenschnittstelle 34 zur Erfassung einer Anzahl von Informationen über ein Umfeld des Schützen sowie eine Ausgabevorrichtung 36 zur Ausgabe eines optischen Warnhinweises an den Schützen auf. Ferner weist das Hilfssystem 30 ein Steuergerät (Controller 38) auf. Der Controller 38 ist im vorliegenden Ausführungsbeispiel in dem Systemmodul 31 angeordnet. Grundsätzlich kann der Controller 38 aber auch in einem smarten Mobilgerät (Smartphone 40, s. Fig. 9) integriert, insbesondere softwaretechnisch implementiert, sein. In diesem Fall erfolgt eine Datenübertragung zwischen dem Smartphone 40 und dem Systemmodul 31 per Funk (gemäß dem Bluetooth-Standard oder ähnlich). In letzterem Fall ist die Datenschnittstelle zur Kommunikation mit dem (externen) Controller 38 eingerichtet und vorgesehen. Eine korrespondierende Datenschnittstelle ist aber dem externen Controller 38 ebenfalls zugeordnet, bspw. in Form einer Internetschnittstelle des Smartphones 40. Weiter optional kann aber auch das Systemmodul 31 den Controller 38 umfassen und auch - im mit dem Smartphone 40 gekoppelten Zustand - dessen Controller nutzen. Rechenaufgaben können hierbei verteilt abgearbeitet werden ("distributed controller").

In Fig. 2 bis 5 sind verschiedene Ausführungsbeispiele dargestellt, die eine Befestigung oder Integration des Systemmoduls 31 in oder am Zielfernrohr 1 zeigen. Fig. 2 zeigt dabei eine Ausführung, bei der das Systemmodul 31 unabhängig von dem Zielfernrohr 1 ausgebildet ist und konkret an einem beliebigen Zielfernrohr 1 befestigt werden kann. Beispielsweise wird das Systemmodul 31 auf das Gehäuse 2 des Zielfernrohrs 1 aufgeklebt oder mittels einer Schelle (nicht dargestellt) oder dergleichen befestigt. In diesem Fall weist die Ausgabevorrichtung 36 zumindest eine LED 41 auf, die vorzugsweise zum Leuchten in unterschiedlichen Farben, insbesondere rot und grün, eingerichtet ist. Diese LED 41 ist dabei an einer Stelle des Systemmoduls 31 angeordnet, die von dem Schützen, der in das Okular 14 des Zielfernrohrs 1 blickt, zumindest mit lediglich geringer Abwendung des Blicks vom Okular 14, eingesehen werden kann. Zumindest kann der Schütze das Leuchten der LED 41 am Rand seines Blickfelds wahrnehmen.

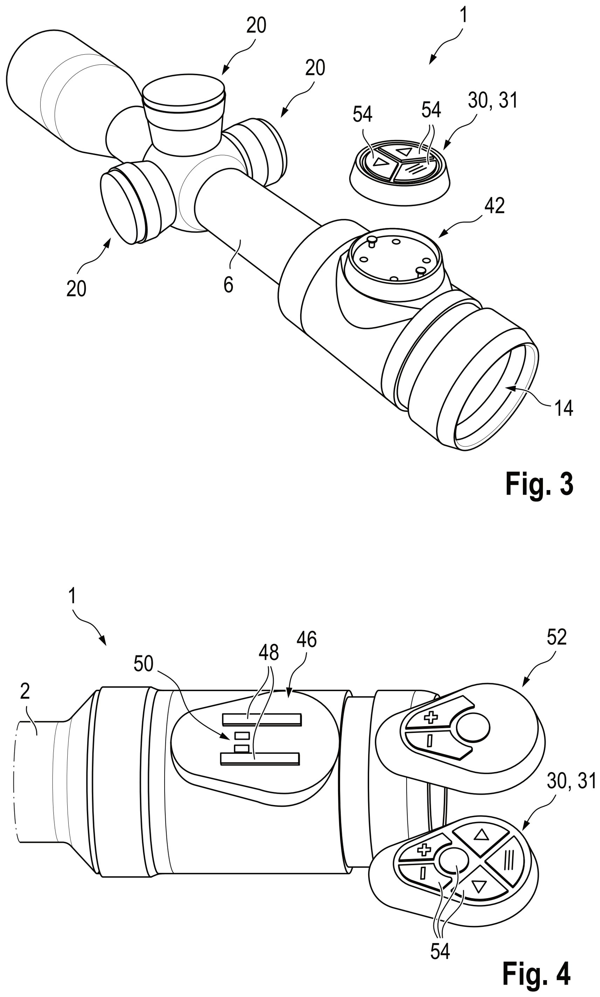

In Fig. 3 und 4 sind Varianten dargestellt, bei denen eine zumindest mechanische Kopplung zwischen dem Zielfernrohr 1 und dem Systemmodul 31 reversibel hergestellt werden kann. In Fig. 3 ist an dem Gehäuse 2 des Zielfernrohrs 1 eine kreisförmige Aufnahme 42, ähnlich einem Verstellturm, ausgebildet. Die Aufnahme 42 ist dazu eingerichtet, das Systemmodul 31 mittels einer Art Bajonettverbindung zu halten. Die Ausgabevorrichtung 36 ist in diesem Fall unter anderem durch eine Absehenbeleuchtung 44 (vgl. Fig. 1) gebildet. Die Absehenbeleuchtung 44 ist zwar bereits in das Zielfernrohr 1 integriert, kann aber durch ein externes Steuersignal aktiviert und deaktiviert werden. Eine Ansteuerung mittels eines solchen Steuersignals erfolgt durch eine entsprechende Signalausgabe durch den Controller 38. Eine Signalübertragung erfolgt durch in die Aufnahme 42 integrierte Kontakte (nicht näher dargestellt). Somit bildet die Absehenbeleuchtung zumindest im bestimmungsgemäßen Einsatzzustand einen Teil des Hilfssystems 30.

In Fig. 4 ist eine Art Schwalbenschwanzaufnahme 46 dargestellt. Diese weist zwei parallele Schienen 48 mit (insbesondere jeweils voneinander abgewandten) Hinterschneidungen auf, auf die das Systemmodul 31 mit gegengleichen Schienen oder Nuten (jeweils nicht näher dargestellt) aufgeschoben wird. Zusätzlich sind an der Schwalbenschwanzaufnahme 46 zwei Kontaktflächen 50 ausgebildet, die mit korrespondierenden Federkontakten (nicht näher dargestellt) des Systemmoduls 31 in der bestimmungsgemäßen Montagestellung kontaktiert sind. In Fig. 4 ist ein zweites Modul 52 dargestellt, das anstelle des Systemmoduls 31 am Zielfernrohr 1 befestigt werden kann. Beispielsweise bildet dieses Modul 52 einen sogenannten Rangefinder, mittels dessen Entfernungsdaten zusätzlich zu dem Absehen in ein durch das Okular 14 sichtbares Bild eingeblendet werden können.

Mittels der Kontaktflächen 50 können vom Controller 38 ausgegebene Steuersignale im Zielfernrohr 1 empfangen werden und bspw. zur Veränderung einer Leuchtfarbe des Absehen-Elements 16 herangezogen werden.

In Fig. 5 ist ein Ausführungsbeispiel dargestellt, bei dem das Hilfssystem 30 in das Zielfernrohr 1 integriert ist. Zwar ist das Hilfssystem 30 von einer Oberseite des Zielfernrohrs 1 zugänglich, aber nicht von diesem abnehmbar.

Wie aus den Fig. 2 bis 5 zu entnehmen ist, weist das Hilfssystem 30 eine oder auch mehrere Tasten 54 auf einer Oberseite auf, um das Hilfssystem 30 zu aktivieren, zu deaktivieren und/oder optional unterschiedliche Funktionen anzuwählen.

Nachfolgend werden Funktionalitäten des Hilfssystems 30 insbesondere anhand Fig. 6 bis 9 näher beschrieben.

In einem bestimmungsgemäßen Betrieb (Aktivzustand) des Hilfssystems 30 steht dieses mittels der Datenschnittstelle 34 mit dem Smartphone 40 in Verbindung. Die Sensoranordnung 32 weist ein inertiales Messsystem (IMU) umfassend einen Gyrosensor, beispielsweise einen entlang sowie um drei aufeinander senkrecht stehenden Raumrichtungen sensitiven MEMS-Beschleunigungssensor sowie ein Magnetometer, auf. Anhand dessen Sensorsignals ermittelt der Controller 38 eine aktuelle absolute Ausrichtung (Neigungs- oder Elevationswinkel, Schwenk- oder Gierwinkel und Rollwinkel) der Schusswaffe im Raum, konkret anhand der Annahme, dass das Zielfernrohr 1 bestimmungsgemäß mit der Schusswaffe verbunden ist. Von dem Smartphone 40 erhält der Controller 38 (via die Datenschnittstelle 34) eine Standortinformation zu dem aktuellen Standort des Nutzers der Schusswaffe (des Schützen, bspw. eines Jägers). Anhand des aktuellen Standorts ermittelt der Controller 38 als Information über die Umgebung des Jägers, wo in der Umgebung des Jägers sicherheitsrelevante Bereiche ("Sperrbereiche") sind. Insbesondere nutzt der Controller 38 im Fall der mittelbaren Ermittlung eine auf dem Smartphone 40 installierte Applikation und somit auch den Mikroprozessor des Smartphones 40 ("distributed controller"). Die Applikation greift dabei auf Kartenmaterial zu, das in einer spezifischen Datenbank hinterlegt ist und auf dem (bspw. allgemein oder insbesondere für verschiedene Jagdreviere) Sperrgebiete 60 bspw. aufgrund von Besiedlung oder von Wegen ausgewiesen sind, in deren Richtung nicht geschossen werden darf oder sollte. Des Weiteren ist die Applikation vorteilhafterweise auch zu Verzeichnung der Standorte anderer Schützen, insbesondere Jägern, die ebenfalls diese Applikation nutzen, eingerichtet. Optional zeigt die Applikation eine solche Karte mit Sperrgebieten 60, Wegen 62 und auch Standorten anderer Personen 64 auf einem Display des Smartphones 40 an (s. Fig. 9). Ebenfalls zeigt die Applikation auch den eigenen Standort und davon ausgehend die Schussrichtung 66 der eigenen Schusswaffe (ermittelt anhand des Gyrosensors) an. Letzteres ist insbesondere bei Drückjagden oder dergleichen vorteilhaft. Die Applikation bildet also während der bestimmungsgemäßen Nutzung des Hilfssystems 30 einen Teil dessen.

Der Controller 38 ist darüber hinaus aber auch dazu eingerichtet, im Blickfeld des Jägers einen Warnhinweis mittels der Ausgabevorrichtung 36 auszugeben, falls die Ausrichtung der Schusswaffe (des Zielfernrohrs 1) zu einem Schuss in Richtung eines Sperrgebiets 60, eines anderen Jägers (Person 64) oder auch eines potenziell genutzten Wegs 62 führen würde. Als Warnhinweis leuchtet, im Ausführungsbeispiel gemäß Fig. 2 "nur", die jeweilige LED 41 der Ausgabevorrichtung 36, insbesondere mit Warnfarbe Rot.

Zusätzlich oder auch alternativ zu der vorstehend beschriebenen Ermittlung, ob die Schusswaffe in Richtung auf einen Sperrbereich gerichtet ist, kann der Controller 38 auch dazu eingerichtet sein, aus dem Kartenmaterial Topographie-Informationen - d. h. dreidimensionale Geländeformen - auszulesen oder mittel der Datenschnittstelle 34 solche Informationen zu beziehen. Diese Topographie-Informationen gleicht der Controller 38 mit der (absoluten) räumlichen Ausrichtung der Schusswaffe ab und ermittelt dabei, ob (oder mit welcher Wahrscheinlichkeit) die eine vorausberechnete Trajektorie eines Geschosses, konkret also voraussichtliche Flugbahn, innerhalb einer vorbestimmten Entfernung zur Schusswaffe (bspw. innerhalb von 400 Metern) auf Boden treffen würde. Trifft die Trajektorie nicht (oder mit hinreichender Wahrscheinlichkeit nicht) innerhalb dieser Entfernung auf Boden, fasst der Controller 38 dies als unsichere Schusssituation auf und gibt den oder einen entsprechenden Warnhinweis aus.

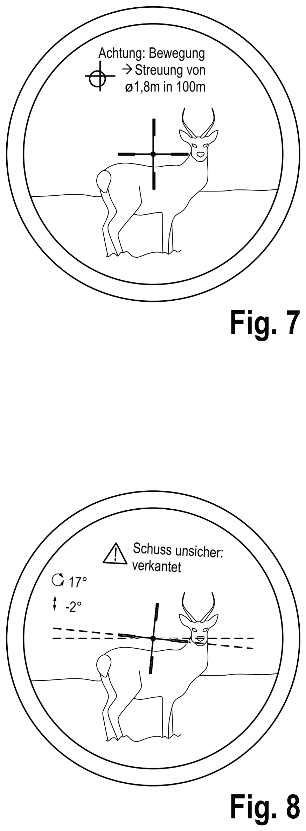

In Fig. 6 ist ein weiterführendes Ausführungsbeispiel dargestellt. Hier verfügt das Zielfernrohr 1 über die Absehenbeleuchtung 44, und das Hilfssystem 30 ist mit diesem (dem Zielfernrohr 1) signalübertragungstechnisch gekoppelt (Ausführungsbeispiele gemäß Fig. 3 und 4 sowie 5). Je nach Ausführung des Zielfernrohrs 1 leuchtet bei aktivierter Absehenbeleuchtung 44 nur ein Leuchtpunkt (vgl. Fig. 7) oder ein Zentralbereich 68 des Absehens 18 (Fig. 6). Als Farbe des Warnhinweises wird eine Signalfarbe, bspw. ein grell empfundenes Rot, verwendet, oder zusätzlich oder alternativ auch ein Blinken des beleuchteten Teilelements (Leuchtpunkt oder Zentralbereich 68). Dadurch wird die Aufmerksamkeit des Schützen (Jägers) auf den Warnhinweis gezogen. Zusätzlich können auch die optional vorhandenen LEDs 41 aufleuchten.

Je nach Ausführung des Zielfernrohrs 1 und auch des Hilfssystems 30 ist optional auch ein textgebundener Warnhinweis möglich, der über ein Display (nicht näher dargestellt) ausgegeben wird. Beispielsweise kann ein solches Display anstelle der LEDs 41 im Sichtbereich des Schützen am Systemmodul 31 angeordnet sein. Bei einem digitalen Zielfernrohr 1 kann auch eine Art head up display Funktion realisiert sein, wobei ein Text in das durch das Okular 14 betrachtbare Bild eingeblendet wird. Letzteres ist beispielhaft in Fig. 7 und 8 dargestellt. Ferner kann auch das gesamte im Okular 14 betrachtbare Bild von einem Display erzeugt werden - bspw. im Fall augmentierter Optiken wie z. B. Nachtsicht- oder Wärmebildgeräten. In diesem Fall ist auch das Absehen digital erzeugt. Als Warnhinweis kann in diesem Fall optional auch das Absehen und/oder das betrachtbare Bild abgeschaltet werden.

Über die vorstehend beschriebene, auf der Ausrichtung und dem Standort der Schusswaffe beruhende Warnung (Warnhinweis) hinausgehend, ist der Controller 38 in einem weiterführenden Ausführungsbeispiel dazu eingerichtet, mittels des Gyrosensors eine Bewegung der Schusswaffe zu verfolgen, d. h. den zeitlichen Verlauf der räumlichen Ausrichtung zu bestimmen. Der Controller 38 ist dabei dazu eingerichtet, zu ermitteln, ob sich die Schusswaffe "zu stark" bewegt, beispielsweise weil der Schütze (Jäger) sich vor einem beabsichtigten Schuss körperlich angestrengt hat. Zeigt der Verlauf der Ausrichtung eine über einen Grenzwert hinausgehende, anhaltende (bspw. über mehr als 10 Sekunden) Bewegung, gibt der Controller 38 eine entsprechende Warnung (einen Warnhinweis) aus. Optional ermittelt der Controller 38 zusätzlich eine Schussentfernung. Für letzteres nutzt der Controller 38 bspw. eine Laserentfernungs-Messfunktion des Zielfernrohrs 1 oder berechnet auf Basis einer Bilderkennung und einer dabei erkannten Wildart (und anhand hierfür typischer Größen) die Schussentfernung. Hierzu nutzt der Controller 38 vorzugsweise eine künstliche Intelligenz, bspw. ein neuronales Netz oder dergleichen. Vorzugsweise erfolgt eine entsprechende Auswertung auf dem Mikroprozessor des Smartphones 40. Hierzu weist das Zielfernrohr 1 außerdem Mittel zur Bilderfassung auf, bspw. einen Bildsensor. Aus dem Verlauf des Elevationswinkels und/oder des Schwenkwinkels und der Schussentfernung bestimmt der Controller 38 eine voraussichtliche Abweichung eines Treffpunkts im Ziel. Ist diese Abweichung zu groß (bspw. größer 50 cm auf 100 m) gibt der Controller 38 eine entsprechende Warnung - hier in Textform in das Bild im Okular 14 eingeblendet - aus. Für die Bilderkennung ist der Controller 38 mittels der Datenschnittstelle 34 oder einer weiteren Datenschnittstelle mit dem Zielfernrohr 1, konkret mit dessen Bildsensor, verbunden.

In Fig. 8 ist ein Ausführungsbeispiel für ein unerwünschtes Verkanten der Schusswaffe dargestellt. Dies ermittelt der Controller 38 anhand des Rollwinkels. Liegt dieser bei mehr als 10 Grad, gibt der Controller 38 ebenfalls einen entsprechenden Warnhinweis aus.

In einem weiteren, nicht näher dargestellten Ausführungsbeispiel, in dem der Controller 38 (oder der "distributed controller") ebenfalls zur Bilderkennung eingerichtet ist, ermittelt der Controller 38, ob im Blickfeld des Zielfernrohrs 1 Personen erkennbar (d. h. anwesend) sind. Ist dies der Fall, gibt der Controller 38 ebenfalls einen Warnhinweis aus.

Ebenfalls im Fall der Bilderkennung ist der Controller 38 optional dazu eingerichtet, eine Art eines im Blickfeld des Zielfernrohrs 1 befindlichen Wildstücks zu bestimmen und mit einer in der genannten Applikation zur Verfügung stehenden Datenbank, in der Abschussfreigaben und/oder Abschussverbote zumindest für das aktuelle Jagdrevier geführt sind, abzugleichen. Ein Warnhinweis wird ausgegeben, wenn das erkannte Wildstück nicht freigegeben ist.

In einem weiteren Ausführungsbeispiel ist der Controller 38 dazu eingerichtet, Wetterdaten wie Luftdruck, Luftfeuchtigkeit, Temperatur sowie Windgeschwindigkeit und -richtung aus einer entsprechenden Datenbank zu beziehen (insbesondere über die vorstehend genannte Applikation). Anhand dieser Wetterdaten, sowie der Ausrichtung und des Standorts, ermittelt der Controller 38 eine voraussichtliche Abweichung des Treffpunkts im Ziel, vorzugsweise auch anhand der Schussentfernung. Derartige Berechnungen oder zumindest Abschätzungen sind aus dem Bereich der Präzisionsschützen bekannt und werden hier zumindest für große Schussentfernungen berücksichtigt. Dies kann insbesondere bei Jagd im bergigen Gelände vorteilhaft sein, da hier häufig vergleichsweise große Schussentfernungen vorliegen und auch große Neigungswinkel der Schusswaffe (Schüsse bergauf oder bergab).

Ebenso im Fall der Bilderkennung ist der Controller 38 optional dazu eingerichtet, zu ermitteln, ob freie Sicht auf das Ziel (Wildstück) vorliegt oder bspw. aufgrund von Regen, Schneefall oder Nebel eingeschränkt ist. Im Fall einer solchen Einschränkung kann eine Warnung ausgegeben werden, da bspw. Regen und Schnee aufgrund der Vergrößerung des Zielfernrohrs 1 nicht so auffallen können, aber dennoch den Schuss beeinflussen können.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: Zielfernrohr
- 2: Gehäuse
- 4: Linse
- 6: Lichtweg
- 8: Objektiv-Linsengruppe
- 10: Umkehrsystem
- 12: Innentubus
- 14: Okular
- 16: Absehen-Element
- 18: Absehen
- 20: Verstellturm
- 30: Hilfssystem
- 31: Systemmodul
- 32: Sensoranordnung
- 34: Datenschnittstelle
- 36: Ausgabevorrichtung
- 38: Controller
- 40: Smartphone
- 41: LED
- 42: Aufnahme
- 44: Absehenbeleuchtung
- 46: Schwalbenschwanzaufnahme
- 48: Schiene
- 50: Kontaktflächen
- 52: Modul
- 54: Taste
- 60: Sperrgebiet
- 62: Weg
- 64: Personen
- 66: Schussrichtung
- 68: Zentralbereich

## Patentansprüche

1. System (30) zur Warnung eines Schützen vor einer Schusssituation mit einem potenziellen Sicherheitsproblem, aufweisend
- wenigstens eine Sensoranordnung (32) zur Erfassung wenigstens einer Messgröße über eine Bewegung und/oder aktuelle, vorzugsweise absolute, räumliche Ausrichtung einer Schusswaffe, und/oder Mittel, insbesondere eine Datenschnittstelle (34), zur Erfassung einer Anzahl von Informationen über ein Umfeld des Schützen,
- eine Ausgabevorrichtung (36) zur Ausgabe eines optischen Warnhinweises an den Schützen, wobei die Ausgabevorrichtung in einem bestimmungsgemäßen Einsatzzustand derart an der Schusswaffe angeordnet ist, dass der Schütze im Anschlag den Warnhinweis aufnehmen kann, und
- ein Steuergerät (38), das dazu eingerichtet ist, die wenigstens eine Messgröße und/oder zumindest eine aus der Anzahl von Informationen über das Umfeld des Schützen auszuwerten, und hieraus zu bestimmen, ob bei einem Schuss unter der Voraussetzung der Bewegung bzw. Ausrichtung und/oder der Information über das Umfeld ein Sicherheitsproblem zu erwarten ist, und für den Fall eines zu erwartenden Sicherheitsproblems mittels der Ausgabevorrichtung (36) den Warnhinweis an den Schützen auszugeben.

2. System (30) nach Anspruch 1,
aufweisend die Sensoranordnung (32) und die Mittel, insbesondere die Datenschnittstelle (34), wobei das Steuergerät (38) dazu eingerichtet ist, die wenigstens eine Messgröße mit zumindest einer aus der Anzahl von Informationen über das Umfeld des Schützen zusammenzuführen, hieraus zu bestimmen, ob bei einem Schuss mit der aktuellen räumlichen Ausrichtung ein Sicherheitsproblem zu erwarten ist, und für den Fall eines zu erwartenden Sicherheitsproblems mittels der Ausgabevorrichtung (36) den Warnhinweis an den Schützen auszugeben.

3. System (30) nach Anspruch 1 oder 2,
wobei die Ausgabevorrichtung (36) zumindest im bestimmungsgemäßen Einsatzzustand an einer mit der Schusswaffe verbundenen Zieloptik (1), vorzugsweise okularseitig, angeordnet ist.

4. System (30) nach Anspruch 3,
wobei die Ausgabevorrichtung (36) dazu eingerichtet ist, den Warnhinweis in ein durch die Zieloptik (1) einsehbares Bild einzublenden.

5. System (30) nach Anspruch 4,
wobei die Ausgabevorrichtung (36) dazu eingerichtet ist, als Warnhinweis eine Leuchtfarbe und/oder Leuchtstärke eines beleuchteten Absehens zu verändern.

6. System (30) nach einem der Ansprüche 3 bis 5,
wobei zumindest die Ausgabevorrichtung (36), vorzugsweise das System (30), in die Zieloptik integriert ist.

7. System (30) nach einem der Ansprüche 3 bis 5,
wobei zumindest die Ausgabevorrichtung (36), vorzugsweise das System (30), reversibel mit der Zieloptik (1) koppelbar ist.

8. System (30) nach einem der Ansprüche 1 bis 7,
wobei die Ausgabevorrichtung (36) zur zusätzlichen akustischen Ausgabe des Warnhinweises einen Lautsprecher umfasst oder mit einem Lautsprecher koppelbar ist.

9. System (30) nach einem der Ansprüche 1 bis 8,
wobei die Sensoranordnung (32) durch wenigstens einen gyroskopischen Sensor gebildet ist, der dazu eingerichtet ist, jeweils eine Messgröße für einen Elevationswinkel, einen Schwenkwinkel und einen Rollwinkel der Schusswaffe zu erfassen.

10. System (30) nach einem der Ansprüche 2 bis 9,
wobei die Datenschnittstelle (34) dazu eingerichtet ist, eine Standortinformation zu dem aktuellen Standort des Systems (30) zu erfassen.

11. System (30) nach Anspruch 10,
wobei die Datenschnittstelle (34) dazu eingerichtet ist, im bestimmungsgemäßen Betrieb mit einer Datenbank verbunden zu sein und von dieser als Information über das Umfeld des Schützen Topographiedaten zu der Standortinformation auszulesen, und wobei das Steuergerät (38) dazu eingerichtet ist, anhand der räumlichen Ausrichtung der Schusswaffe einen Wahrscheinlichkeitswert für einen Bodentreffer innerhalb einer vorgegebenen Entfernung zum Standort zu ermitteln und den Warnhinweis auszugeben, wenn der Wahrscheinlichkeitswert einen vorgegebenen Wert unterschreitet.

12. System (30) nach Anspruch 10 oder 11,
wobei die Datenschnittstelle (34) dazu eingerichtet ist, im bestimmungsgemäßen Betrieb mit einer Datenbank verbunden zu sein und von dieser als Information über das Umfeld des Schützen Informationen über potenziell mit Personen besetzte Umgebungsbereiche (60) zu der Standortinformation auszulesen.

13. System (30) nach einem der Ansprüche 10 bis 12,
wobei die Datenschnittstelle (34) dazu eingerichtet ist, im bestimmungsgemäßen Betrieb mit einer Datenbank verbunden zu sein und von dieser als Information über das Umfeld des Schützen Wetterinformationen auszulesen.

14. System (30) nach einem der Ansprüche 3 bis 13,
wobei das Steuergerät (38) im bestimmungsgemäßen Betrieb mittels der Datenschnittstelle (34) mit einer Bilderfassungseinheit der Zieloptik (1) datenübertragungstechnisch verbunden und dazu eingerichtet ist, Bilddaten von der Bilderfassungseinheit zu erfassen, diese hinsichtlich des oder eines zusätzlichen Sicherheitsproblems auszuwerten und gegebenenfalls mittels der Ausgabevorrichtung (36) den Warnhinweis auszugeben.

15. System (30) nach Anspruch 14,
wobei das Steuergerät (38) dazu eingerichtet ist, die Bilddaten auf die Anwesenheit einer Person auszuwerten.

16. System (30) nach Anspruch 14oder 15,
wobei das Steuergerät (38) dazu eingerichtet ist, die Bilddaten auf die Anwesenheit eines Wildstücks auszuwerten und mit in einer Datenbank, mit der die Datenschnittstelle (34) im bestimmungsgemäßen Betrieb verbunden ist, hinterlegten Abschussfreigaben für unterschiedliche Wildstücke abzugleichen.

17. System (30) nach einem der Ansprüche 3 bis 16,
wobei die Mittel zur Erfassung der Information über das Umfeld des Schützen einen Abstandssensor umfassen, der im bestimmungsgemäßen Einsatzzustand okularseitig an der Zieloptik (1) angeordnet und vorzugsweise mit der Ausgabevorrichtung (36) integriert ist, wobei das Steuergerät (38) dazu eingerichtet ist, ein Sensorsignal des Abstandssensors auf ein Unterschreiten einer darin transportierten Messgröße für einen Abstand eines Objekts zu dem Abstandssensor auszuwerten und bei Unterschreiten eines Minimalabstandswerts einen zugeordneten Warnhinweis auszugeben.

18. System (30) nach einem der Ansprüche 1 bis 17,
wobei die Ausgabevorrichtung (36) zur Ausgabe des jeweiligen Warnhinweises wenigstens ein vom Schützen einsehbares Leuchtmittel (41) und/oder ein Display aufweist.
